# EUROPEAN PATENT SPECIFICATION

(11) **EP 2 076 572 B1**
(45) Date of publication and mention of the grant of the patent: **28.04.2010**
(21) Application number: 07843415.6
(22) Date of filing: 27.09.2007
(51) Int. Cl.: C09D 11/10

(54) **A DECORATED PLASTIC GLAZING ASSEMBLY VIA A FILM INSERT MOLDING PROCESS**
ANORDNUNG ZUR GLASIERUNG EINES DEKORIERTEN KUNSTSTOFFS ÜBER EIN FILMEINSATZ-FORMUNGSVERFAHREN
ENSEMBLE DE GLAÇAGE DE PLASTIQUE DÉCORÉ PAR L'INTERMÉDIAIRE D'UN PROCÉDÉ DE MOULAGE PAR INSERTION D'UN FILM

(30) Priority: 04.10.2006 US 538513
(43) Date of publication of application: 08.07.2009
(73) Proprietor: Exatec, LLC., Wixom, MI 48393 (US)
(72) Inventor: LI, Chengtao, Novi, MI 48374 (US); GRANDHEE, Sunitha, Novi, MI 48375 (US); WEISS, Keith, D., Fenton, MI 48430 (US)
(74) Representative: Solf, Alexander
(86) International application number: PCT/US2007/079794
(87) International publication number: WO 2008/042731

(56) References cited:
- US-A1- 2003 030 172
- US-A1- 2006 025 496

## Description

### BACKGROUND OF THE INVENTION

Plastic materials are being used in a number of automotive engineering applications to enhance vehicle styling. For example, plastic materials are currently used in the manufacturing of such parts and components as B-pillars, headlamps, and sunroofs. An emerging application for transparent plastic materials is automotive window systems. When a transparent plastic material is used to manufacture automotive windows, it is a manufacturing requirement that such windows have identification marks. The perimeter of a window also must often be marked with an opaque fade-out border to enhance the appearance of the installed window. Additionally, it is a manufacturing requirement that the windows are coated to make them scratch resistant.

In order to mark such polycarbonate surfaces with information and a fade-out border, the inks that are used must not only adhere to the plastic surface, but must also be compatible with any primer/coating systems that are applied to the plastic surface for abrasion and UV protection. Any ink used to mark the surface of a plastic panel or window must not be softened, damaged, or removed during the application of the protective coating system. The inks must also be able to survive the rigorous testing required to qualify the product by the automotive industry.

Plastic films with an ink printed onto their flat surface are being converted into three dimensional (3-D) decorative plastic articles as replacements for metallic and glass 3-D articles. One of the most efficient methods of manufacturing decorative, 3-D plastic articles, such as automotive assemblies, is by film insert molding (FIM). The use of FIM offers many advantages over other decoration methods. With respect to decorating a plastic substrate, the use of FIM can provide multiple advantages to the manufacturer, such as design flexibility; the use of multiple colors, effects, and textures in a single operation; long-lasting graphics; enhanced manufacturing productivity; and an overall system cost reduction.

While having several advantages, the use of film insert molding also provides some disadvantages or issues that must be overcome before the automotive industry will adopt substantial usage of plastic components derived from such an operation. More specifically, the formation of optical defects caused by ink wash-out and pin-holing needs to be reduced or eliminated. In addition, the ability of an ink to adhere to the surface of a plastic film and be able to melt bond with another plastic resin upon back molding onto the printed surface needs to be addressed through the formulation of the ink.

From the above, it is seen that, there is a need in the industry to formulate inks that can be used to print upon or decorate the surface of a plastic substrate and that possess excellent adhesion, uniform opacity, and stability during all of the thermoforming and injection molding operations necessary to form a complex 3-D article or assembly. The present invention provides a plastic glazing assembly with an ink that has all of the above said properties and that is substantially free from surface defects.

### SUMMARY OF THE INVENTION

The present invention provides a plastic glazing assembly via a film insert molding (FIM) process. In one aspect, the plastic glazing assembly comprises a transparent plastic panel comprising base and top layers, a decorative ink that is printed on the plastic panel, a weathering layer and an abrasion resistant layer deposited on to the weathering layer. In this embodiment, the ink composition printed onto the plastic panel is adaptable to adhere to the surface of the panel and is compatible with the weathering layer, which may be a primer/hard-coat system. The compatibility of the ink was tested by determining the amount of ink that was bled or rubbed off during the application of the weathering layer.

In another aspect, the ink comprises a blend of polyester and polycarbonate resins. The ink further includes an additive, such as an isocyanate and a solvent-mixture to aid in cross-linking of the polyester and polycarbonate resins. In this embodiment, the ink applied and cured on the plastic panel and subsequently coated with an abrasion resistant layer was found to pass both adhesion tests after water immersion and cataplasma tests.

In yet another aspect, a substrate printed with an ink is converted into a 3-D glazing panel by thermoforming and injection molding. The ink composition applied on the film was tested for its ability to print on both surfaces of the polycarbonate film, draw-down ability, adhesion, opacity, and ink washout characteristics during forming, trimming, injection molding, and post-molding/coating processes.

### BRIEF DESCRIPTION OF THE DRAWINGS

Figure 1 is a representative view of a trimmed mirror housing appliqué.

Figures 2A-2D show multiple images of the trimmed mirror housing with its weathering layer and abrasion resistant layer applied.

Figure 3 shows a representative view of a multi-featured surface of a formed top layer indicating good geometrical capability.

Figure 4 is a representative view of a trimmed mirror housing exhibiting ink abrasion on its surface.

Figure 5 shows a part formed during a draw down test where the ink formulation comprised a weight ratio of 80 PE : 20 PC, and that exhibits excellent opacity.

Figure 6 shows a portion of a test part similar to that of Figure 5, which exhibits pinholes in the ink as may be observed upon shining light up through the top layer of the part.

Figure 7 is a representative view of a formed and molded assembly exhibiting ink wash-out from the top layer, after being subjected to back molding.

### DETAILED DESCRIPTION OF THE INVENTION

The following description of the preferred embodiments is merely exemplary in nature and is in no way intended to limit the invention or its application or uses.

In one aspect the present invention provides an automotive decorative glazing assembly comprising a transparent plastic base layer or substrate having a first and a second surface; a transparent plastic top layer having a first and a second surface; a printed and cured ink on the first surface of the top layer; the first surface of the base layer and the first surface of the top layer being integrally melt bonded together forming a plastic panel; the plastic panel further comprising a weathering layer and an abrasion resistant layer.

The transparent plastic base layer and top layer of the present invention may be comprised, of but not limited to, polycarbonate, acrylic, polyarylate, polyester and polysulfone resins, as well as copolymers and mixtures thereof. Preferably, the transparent plastic base layer includes bisphenol-A polycarbonate and all other resin grades (such as branched or substituted), as well as being copolymerized or blended with other polymers such as PBT, ABS, or polyethylene. The transparent plastic base layer and top layer may further be comprised of various additives, such as colorants, mold release agents, antioxidants, and ultraviolet absorbers (UVAs), among others.

The thickness of the plastic top layer, which by definition is considered a plastic film, is about 0.05 to 2 mm, with about 0.5 mm being preferred. The thickness of the injection molded base layer is approximately 2 mm to about 5 mm, with about 3 mm to about 4 mm being preferred. The overall thickness of the glazing assembly, including both the top layer and the base layer melt bonded together, is about 3 mm to 6 mm, with between about 4 mm and 5 mm being preferred.

The ink printed on the first surface of the transparent plastic top layer comprises polyester-based resins, polycarbonate-based resins or mixtures thereof. The ink may be applied onto the surface of the top layer via screen printing, although other methods of printing known to those skilled in the art are acceptable, such as but not limited to mask/spray ink-jet, and pad or tampon printing.

After the first surfaces of both the top layer and base layer are melt bonded together, the resulting plastic panel is typically coated with a coating system to form a weathering layer and an abrasion resistant layer. The weathering layer is applied to the second surface of the top layer. In another embodiment, the weathering layer may be applied also to the second surface of the base layer.

The weathering layer preferably comprises either a polyurethane coating or a combination of an acrylic primer and a silicone hard-coat. Alternatively, other coating systems may be used. An example of such an acrylic primer includes Exatec® SHP 9X, which is commercially available from Exatec, LLC (Wixom, MI) and distributed by General Electric Silicones (Waterford, NY). In one preferred embodiment, the primer is coated on the transparent plastic panel, air dried, and then thermally cured between about 80°C and 130°C for between about 20 to 80 minutes and more preferably at about 120°C for about 60 minutes. A silicone hard-coat is then applied over the primer layer and is air dried before curing at preferably between about 80°C. and 130°C for between about 20 to 80 minutes and more preferably at about 100°C for about 30 minutes. A preferred silicone hard-coat used in the present invention is available from Exatec, LLC and distributed by General Electric Silicones as Exatec® SHX.

In a preferred embodiment of the present invention, the primer in the weathering layer is a waterborne acrylic primer comprising water as the first co-solvent and an organic liquid as a second co-solvent. The general chemical classes associated with the second co-solvent present in the primer/hard-coat system includes glycol ethers, ketones, alcohols and acetates. The acrylic resin may be present as a water soluble, dispersible, or reducible resin. The primer may contain other additives, such as, but not limited to, surfactants, antioxidants, biocides, ultraviolet absorbers (UVAs), and drying agents, among others.

The resin in the silicone hard-coat is preferably a methylsilsequioxane resin dispersed in a mixture of alcohol solvents. The silicone hard-coat may also comprise other additives, such as but not limited to surfactants, antioxidants, biocides, ultraviolet absorbers, and drying agents, among others.

The weathering layer may be applied to the transparent plastic panel by dipping the panel in the coating at room temperature and atmospheric pressure through a process known to those skilled in the art as dip coating. Alternatively, the weathering layer may be applied by flow coating, curtain coating, spray coating, or other processes known to those skilled in the art.

A substantially inorganic coating that adds additional or enhanced functionality to the automotive decorative glazing assembly, such as improved abrasion resistance, is applied on top of the weathering layer to both the second surfaces of the base layer and top layer of the integrally bonded plastic panel. In an embodiment of the present invention where the weathering layer is absent from the second surface of the base layer, the abrasion resistant coating may be deposited directly onto the second surface of the base layer. Specific examples of possible inorganic coatings comprising the abrasion resistant layer include, but are not limited to, aluminium oxide, barium fluoride, boron nitride, hafnium oxide, lanthanum fluoride, magnesium fluoride, magnesium oxide, scandium oxide, silicon monoxide, silicon dioxide, silicon nitride, silicon oxy-nitride, silicon oxy-carbide, silicon carbide, hydrogenated silicon oxy-carbide, tantalum oxide, titanium oxide, tin oxide, indium tin oxide, yttrium oxide, zinc oxide, zinc selenide, zinc sulfide, zirconium oxide, zirconium titanate, or glass, and mixtures or blends thereof.

The abrasion resistant layer may be applied by any technique known to those skilled in the art. These techniques include deposition from reactive species, such as those employed in vacuum-assisted deposition processes, and atmospheric coating processes, such as those used to apply sol-gel coatings to substrates. Examples of vacuum-assisted deposition processes include, but not limited to, plasma enhanced chemical vapor deposition (PECVD), arc-PECVD, ion assisted plasma deposition, magnetron sputtering, electron beam evaporation, and ion beam sputtering. Examples of atmospheric coating processes include, but are not limited to, curtain coating, spray coating, spin coating, dip coating, and flow coating.

The transparent plastic panel may be formed into a glazing assembly through the use of any known technique to those skilled in the art, such as molding, which includes injection molding, blow molding, and compression molding and/or thermoforming, the latter including thermal forming, vacuum forming, and cold forming. Although not necessary, the aforementioned techniques may be used in combination with each other, such as thermoforming the transparent plastic top layer into the shape of one inside surface of a mold prior to injection molding the base layer onto and integrally bonding with the top layer, thereby, forming a transparent plastic glazing assembly with the desired shape.

In the present invention, the glazing assembly is prepared by Film Insert Molding (FIM), which is also known as In-mold Decoration (IMD). In its most flexible form, FIM uses a flat plastic film with a decoration printed onto the upper or first surface of the film. In another embodiment, the decoration may be printed onto the lower or second surface of the film. The decorated film is then formed to the required shape, or left flat if desired, and finally trimmed to the desired size. The decorated and trimmed film is then placed into the injection mold cavity onto a surface of the mold, with the second surface of the film facing the mold's surface. The film may be held to the surface of the mold by vacuum or any other means known to those skilled in the art of film insert molding. The molten resin that forms the base layer is then injected into the mold and onto the first surface of the film (the top layer). Upon contact between the hot resin and the cool film, melt bonding between the top layer and the base layer occurs. The decorated film therefore becomes an integral part of the finished plastic panel. Plastic panels designed and manufactured in this manner exhibit enhanced scratch, solvent, abrasion, and chemical resistance in regards to the ink when the print is on the first surface of the top layer due to the print being encapsulated by the plastic base and top layers.

Techniques involved in producing graphics on a film include screen-printing, pad or tampon printing, membrane image transfer printing, and the like. Screen-printing is a known commercial process in which the printed image is applied via screen-printing to a "flat" film. Screen printing allows a sufficient ink deposit to maximize ink opacity and selectively block light providing the required black-out effect observed for borders around most automotive windows. This film is then usually held via vacuum to the surface of the mold. The film becomes part of the surface of the panel upon the injection of a plastic resin into the mold. Inks should be flexible enough to allow for forming in subsequent stages. These inks also need some degree of heat and shear force resistance in order to prevent ink flow during the injection molding or thermoforming stages of the process. A sufficient deposit of ink is required to give good opacity when stretched and thinned during a thermoforming operation. However, too thick a deposit can reduce the flexibility desired for an ink that will be subjected to a thermoform operation. The inventors have found that the amount of ink deposit tends to be dependent upon the amount of form depth required by the finished glazing assembly. Heavily pigmented or filled inks do not form well due to their poor cohesive strength. Certain ink systems, such as reactive inks (e.g. polyester/isocyanate two component inks) or specially formulated heat resistant inks may be used without the use of any additional adhesion promotion. Other inks may require adhesion promoting layers to improve the adhesion between the ink layer and the plastic top layer.

Once the ink is printed, whichever ink system is chosen, drying should be thorough to ensure that any retained solvent is removed from the print. Residual or retained solvent may cause problems at a later stage with cracking/crazing of the polycarbonate itself due to solvent damage. The inks may be thermally cured by being exposed to an elevated temperature for a period of time. For example, a printed ink may be substantially cured upon exposure to about 90-125°C for about 20-60 minutes. The thickness of the cured ink print is typically about 4 µm to 20 µm, with between about 8 µm to 18 µm being preferred.

As previously noted, the forming of the printed film (top layer) can be performed with a variety of techniques such as vacuum forming (thermoforming), pressure forming, or hydroforming. Generally, as is the case for thermoforming, heating is accomplished using a bank of ceramic heating elements positioned over the film. The film is clamped above a tool resembling the shape of the desired finished panel or window. The tool is raised from beneath and when an airtight seal is achieved, the applied vacuum draws the softened film over the tool. Provided that forming is carried out soon after curing the printed ink there may be no need to pre-dry the film. However, pre-drying the top layer may be necessary for thick (greater than about 375 µm or 0.015") films, even immediately after ink curing. The thickness of the film used to form the top layer is typically on the order of about 0.05 to about 2.0 mm, with about 0.5 being preferred.

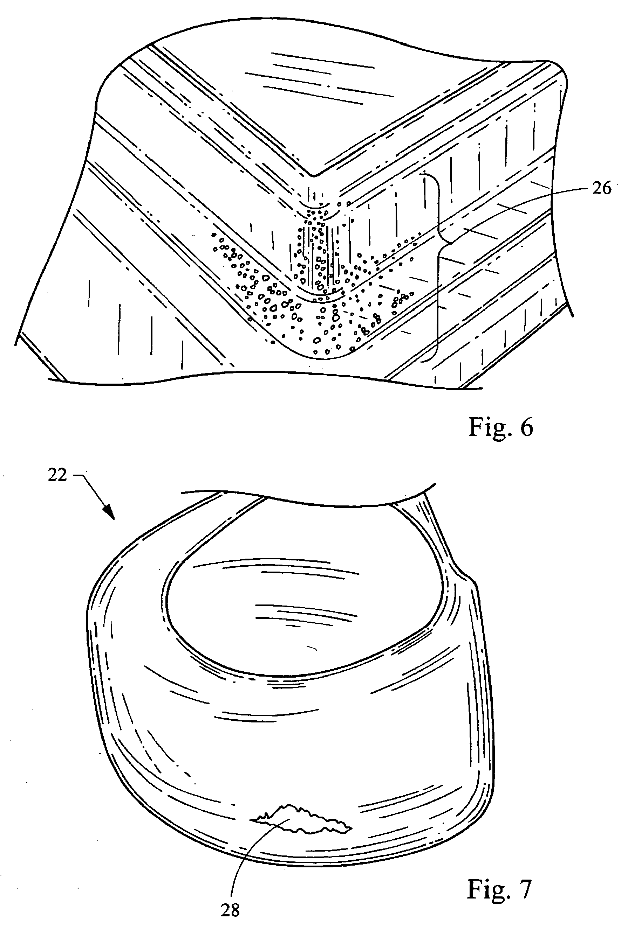

Integrally bonding the top layer to the base layer in order to form a finished plastic glazing assembly is done using injection molding, in which the plastic resin of choice for forming the base layer is polycarbonate. In this case, it is important to ensure that good adhesion of the resin to the film and the surface of the ink (when the ink is printed on the first surface of the top layer) is maintained. The design of the injection gate is of major importance in order to minimize any stresses produced within the hot flowing resin that may cause the printed and cured ink to soften and begin to flow (e.g., wash-out with the injected resin). Ink wash-out is characterized as an optical defect in that the final result can be visually observed in the decorative print of a finished plastic panel as a void or space absent of ink. (See Figure 7)

Direct sprue gates generally give poor results (high degree of ink wash-out) due to the high shear stress that arises from this gate design. Fan gates and rib gates are most effective in minimizing the occurrence of stresses that may be detrimental to the printed decoration. Tab gates are used for melt orientation when a large volume of resin is needed to fill the mold. The tab design helps avoid surface splotches due to high shear, direct gating, or jetting. A slow injection speed also helps in this regard.

When the ink is printed on the second surface of the top layer, it is necessary that the ink also pass additional tests that have been specified by automotive original equipment manufacturers (OEMs). Such tests include an adhesion test after water immersion at an elevated temperature and a cataplasma-like or a full cataplasma test. Unless the ink passes all the tests specified, the transparent plastic panel cannot be used in the assembled motor vehicle as a glazing assembly.

The water immersion test includes an initial cross-hatch adhesion test (tape pull) according to ASTM D3359-95 followed by submersing the printed and coated plastic substrate in deionized water at an elevated temperature (e.g., 65°C) for approximately 10 days. An ink passes the test only if greater than 95% retention of the ink and coating system is obtained in a final cross-hatch adhesion test upon completion of the test protocol.

Another form of an adhesion test is represented by the cataplasma-like and full cataplasma tests. These two tests are identical in sample preparation and exposure conditions with one minor exception. The cataplasma-like test evaluates the appearance and adhesion properties of the printed ink and applied coatings. The full cataplasma test evaluates the performance of a standard adhesive system used by the glazing industry when applied to a decorated and coated glazing panel. In other words, the full cataplasma test provides a method for performing an adhesive peel test for window bonding systems and a cross-hatch adhesion test, while a cataplasma-like test provides only cross-hatch adhesion results. The environmental conditions utilized in the cataplasma test are considered by those skilled in the art as being extremely severe for coated systems. Thus very few inks and coatings are known to be able to survive or pass this test. The general protocol associated with a cataplasma test is well known to those skilled in the art and is adequately described in U.S. Patent No. 6,958,189 and U.S. Patent Application Publication No. 2006-0025496 A1, both of which are hereby incorporated by reference in their entirety.

The inventors have unexpectedly found that an ink having a blend of specific polyester and polycarbonate resins within a certain range is able to survive all OEM testing including water immersion, cataplasma-like, and full cataplasma, when printed on the second side of the top layer, as well as withstand wash-out and cracking when printed on the first side of the top layer and subjected to exposure to a molten resin upon being melt bonded to a base layer.

The polyester resin in the ink that passed the OEM tests is a mixture of saturated polyesters, which are either straight or branch-chained aliphatic or aromatic polymers. These polymers may contain either hydroxyl or carboxyl groups that form films via condensation polymerization with other resins (e.g., amino formaldehyde, melamine, polyisocyanate, etc.) that contain complimentary reactive groups. Saturated polyesters are made from the polymerization of various alcohols (di-, tri-, and tetra-hydric alcohols) and acids (or acid anhydrides), such as orthophthalic anhydride, terephthalic acids, and trimellitic anhydride. Commonly an excess of polyol is used, thereby, providing excess hydroxyl functionality in the final resin. It is known that some polyols, such as 2,2,4-trimethyl, 1,3-pentanediol (TMPD), 1,4-cyclohexane dimethanol (CHDM), neopentyl glycol (NPF), and trimethylol propane (TMP) give more hydrolytically stable systems than do ethylene glycol or glycerol. If excess acid is used as a raw material, the resulting resin will contain carboxylated functionality.

The polycarbonate ink that passed the OEM tests contains a high temperature polycarbonate resin. This polycarbonate resin used in inks is suitable for film insert molding (FIM) with a polycarbonate molded substrate. The polycarbonate resin is based on geminally disubstituted dihydroxydiphenyl cycloalkanes. The resin may contain bifunctional carbonate structural units or hydroxyl groups. The polycarbonate backbone may be aliphatic or aromatic, as well as linear or branched. The hydroxyl groups present in the binder may be obtained from the alcoholysis of diphenyl carbonate with a polyol, such as an alkylene diol or an alkylene ether diol. Other suitable diols or diphenols include dihydroxydiphenyl cycloalkanes, such as 2,2-bis-(4-(2-hydroxypropoxy)phenyl)-propane and 1,1-bis-(4-hydroxyphenyl)-3,3,5-trimethyl cyclohexane. A variety of other polyols containing more than two hydroxyl groups, such as trimethylol propane, glycerine, or pentaerythritol may be incorporated.

In order to promote additional cross-linking between the polycarbonate and polyester resins, the formulated ink preferably contains a small amount of an isocyanate additive. The solvent preferably used in the ink is a mixture of aromatic hydrocarbons and dibasic acid esters. In this embodiment, the ink is characterized by about 1.9% to 13.2% polycarbonate resin, about 5.4% to 34.2% polyester resin and about 0.1% to 5.0% isocyanate additive and about 20.7% to 84.3% solvent. The ink may be formulated with a higher solids percentage than described above for storage stability and shelf life, and then "let down" or decreased in solids content to the parameters described above by the addition of solvent immediately prior to use. Additionally, the formulated ink may contain about 3.6% to 38.2% colorant pigment, about 0.0% to 45.2% opacity enhancing filler, and 0.0% to 1.5% dispersant.

The ink may be prepared from raw materials using dispersion techniques known to those skilled in the art, such as, but not limited to, ball mills, roll mills, attritor mills, planetary mixers, and high-speed blade mixers. The ink may be prepared by blending two ink formulations together in a certain ratio. Additional components not present in either of the two ink formulations, such as an isocyanate additive, dispersants, fillers, and pigments may be added to the formulation by the dispersion techniques described above. The inventors have found that the ratio of the polyester ink to the polycarbonate ink has preferably a weight ratio of less than about 100:0 and greater than about 50:50.

The composition associated with the solids left in the applied and dried/cured print is about 49% to 72% of the polyester resin and about 12% to 18% of the polycarbonate resin. The solids weight percent for the isocyanate additive incorporated into this blend is about 6% to 10%. This ink composition may also optionally contain up to about 1.5% of an additional surfactant and up to about 30% of additional fillers or pigments.

The polycarbonate ink (Noriphan HTR, Proell KG, Germany) used in the abovementioned blend contains a mixture of polycarbonate resin and high temperature stable pigments dispersed in ethylbenzene, solvent Naphtha (light aromatic), 1,2,4-trimethylbenzene, xylene isomers, diacetone alcohol, mesitylene, n-butyl alcohol, and various esters.

The polyester ink (8400 Series CVIM, Nazdar Inc., Kansas) comprises a polyester resin mixture (19-33%), TiO₂ (0-38%), carbon black (0-11%), (11-21%), gamma-butyrolactone (4-10%), aliphatic dibasic acid ester and colorant pigment (0-11%) dispersed in petroleum distillate (14-28%), cyclohexanone mixture (4-8%), and naphthalene (<4%).

The colorant pigment in the ink is preferably carbon black although other inorganic and organic colored pigments may be utilized. Such colorant pigment may include, but not be limited to carbon black, copper phthalocyanine blue, dioxazine violet, quinacridone magenta, azo diarylide yellow, rutile titanium dioxide (white), perylene red, molybdate orange, yellow iron oxide, chromium green oxide, and cadmium orange. Special effect pigments, such as pearlescent pigments and metallic flakes may be incorporated into the ink formulation.

The isocyanate additive used is preferably an aromatic polyisocyanate, such as the NB-70 catalyst (Nazdar Inc., Kansas). This particular isocyanate is dispersed in propylene glycol methyl ether acetate (40%, also called PM acetate) although another solvent could be utilized. The isocyanate can also be other aromatic or aliphatic diisocyanates, such as polymeric hexamethylene diisocyanate (HMDI), isophorone diisocyanate (IPDI), 2,6-tolylene diisocyanate (TDI), diphenyl methane diisocyanate (MDI), or xylene diisocyanate (XDI), among others.

The optional opacity enhancing fillers may be inorganic in nature, such as alumina, silica, titanium dioxide, magnesium silicate (talc), barium sulfate, calcium carbonate, aluminium silicate (clay), calcium silicate (wollastonite), aluminium potassium silicate (mica), metallic flakes etc., or organic in nature, such as furnace black, channel black, and lamp black among others. Highly refractive fillers, such as titanium dioxide, are preferred for increasing opacity due to their small mean particle size of less than 1.0 micrometer. For example, titanium dioxide having a mean particle size of 0.36 micrometer is available as Ti-Pure R-706 (Dupont Titanium Technologies, Delaware).

The following specific examples are given to illustrate the invention and should not be construed to limit the scope of the invention.

### Test Substrate Preparation

Table I represents the ink composition that were made by blending different ratios of a polyester ink (8452, Nazdar Inc., Kansas) and a polycarbonate ink (Noriphan® HTR-952, Proll KG, Germany) together using a medium speed blade mixer. After the two inks were blended, additional solvent (097/003 retarder, Proll KG & RE196 retarder, Nazdar Inc.) was mixed in with the ink prior to the addition of an isocyanate additive. The aromatic isocyanate additive (NB-70, Nazdar Inc., Kansas) was the last component added to the blended ink. The blended ink was allowed to stand still for about 15-20 minutes prior to the start of printing a decoration onto a plastic panel in order for any air incorporated into the ink during the mixing process to be reduced or removed.

**Table I**

| # | PE:PC ratio | Polyester (wt. %) | Polycarbonate (wt. %) | Solvent (wt. %) | Isocyanate (wt. %) |
|---|---|---|---|---|---|
| A | 80:20 | 71.2 | 17.8 | 7 | 4 |
| B | 100:0 | 89 | 0 | 7 | 4 |
| C | 20:80 | 16.6 | 66.4 | 12.8 | 4 |
| D | 20:80 | 15.96 | 63.85 | 12.5 | 7.69 |

The inks described above in Table 1 were applied as a decoration via screen-printing on to 730 mm LEXAN T2FOQ polycarbonate films (General Electric). The printed inks were then cured at a temperature of 100°C for 2 hours and dried to a final film thickness of 15 µm. This example describes both the preparation of ink formulations and the decorated plastic films that are to be used in characterization tests described in the further examples that follow.

Subsequently all printed films were coated with both a weathering layer and an abrasion resistant layer. The weathering layer comprised both an acrylic primer (SHP 9X, Exatec LLC) and a silicone hard-coat (SHX, Exatec LLC). Both coatings were applied via a flow coating technique known to those skilled in the art of coating plastic components. Each coating was then cured according to the manufacturer's recommendations.

The abrasion resistant layer comprised a hydrogenated silicon oxy-carbide film deposited using an arc-PECVD process. Such a process is adequately described in described in detail in an article published as J. Vac. Sci. Technol. A, 21(4), Jul/Aug, 1266-1271 (2003), the entirety of which is hereby incorporated by reference. In an arc-PECVD process, a plasma is generated via applying a direct-current (DC) voltage to a cathode that arcs to a corresponding anode plate in an inert gas environment at pressures higher than 150 Torr, e.g., near atmospheric pressure. The near atmospheric thermal plasma then supersonically expands into a plasma treatment chamber in which the process pressure is less than that in the plasma generator, e.g., about 20 to about 100 mTorr.

### Water Immersion and Cataplasma Tests

The printed and coated films described above were then subjected to water immersion and cataplasma-like tests. The results associated with these tests for the films described above are provided in Table 2.

**Table 2**

| # | PE:PC ratio | Water Immersion (% Retention) | | | |
|---|---|---|---|---|---|
| A | 80:20 | PASS | | | |
| B | 100:0 | PASS | | | |
| C | 20:80 | FAIL | | | |
| D | 20:80 | FAIL | | | |

| # | PE:PC ratio | CATAPLASMA-Full | | CATAPLASMA-Full | |
|---|---|---|---|---|---|
| | | Optical Appearance | % Retention | Optical Appearance | % Retention |
| A | 80:20 | PASS | PASS | PASS | PASS |
| B | 100:0 | PASS | PASS | PASS | PASS |
| C | 20:80 | PASS | Fail | PASS | Fail |
| D | 20:80 | PASS | Fail | PASS | Fail |

As seen in Table 2, a blend of a polyester (PE) ink with a polycarbonate (PC) ink in a ratio of 80:20 unexpectedly passed all of the test requirements in both the water immersion and cataplasma tests. As seen in the above table, a film comprising a printed ink having a ratio of 20 PE:80 PC failed in most of the tests. Multiple samples of blended inks with different PE:PC were observed to be borderline between passing and failing all test requirements. All ink blends other than those described above were found to fail either water immersion or cataplasma-Like testing.

### Forming a 3-D Decorative Glazing Assembly

The films comprising a decorative print of blended ink #A or #C were subjected to thermoforming and injection molding to form a 3-D automotive glazing assembly. Thermoforming was conducted on a SEISS T8 shuttle Thermoformer, using a new mirror housing tool at the specific experimental conditions shown in Table 3.

**Table 3**

| | |
|---|---|
| Tool Temperature | 120°c |
| Film Temperature | 160-180°C |
| Cooling Time | 30 seconds |
| Drying temperature | 110°C/ 1 hour |

Special attention during the thermoform operation was directed towards the heating profile because of the difference in the thermal diffusivity and heat absorption between the ink and the plastic panel. Under conditions mentioned in Table 3, the inks were deemed stable. Visual inspection of the parts and the tool revealed that the ink did not mark-off on the tool, nor did it char at the high processing temperatures.

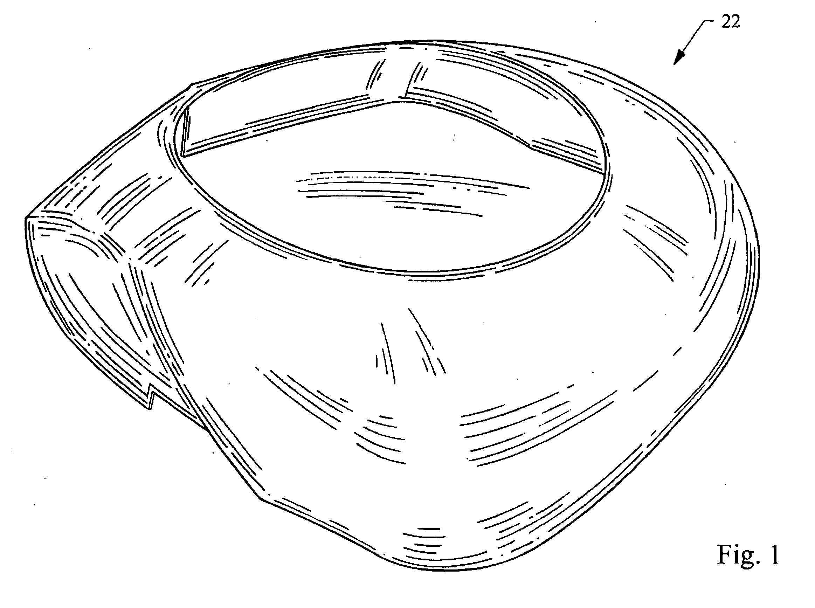

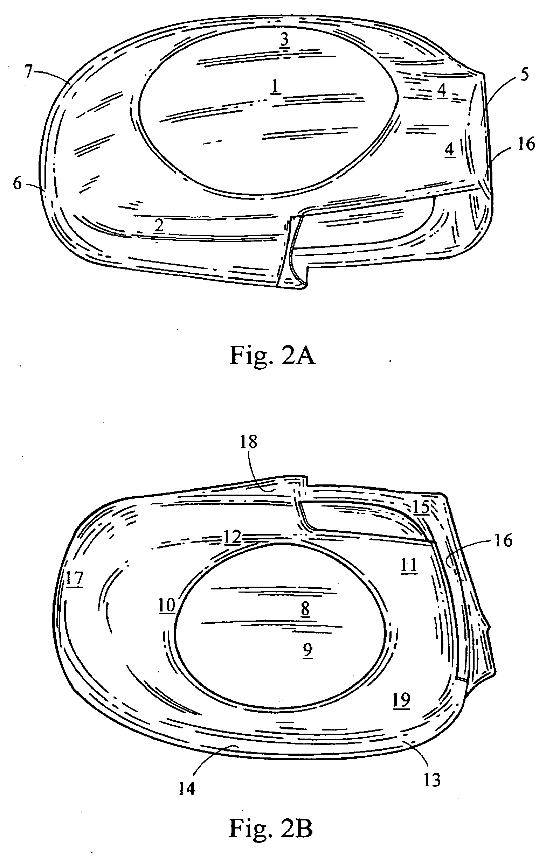

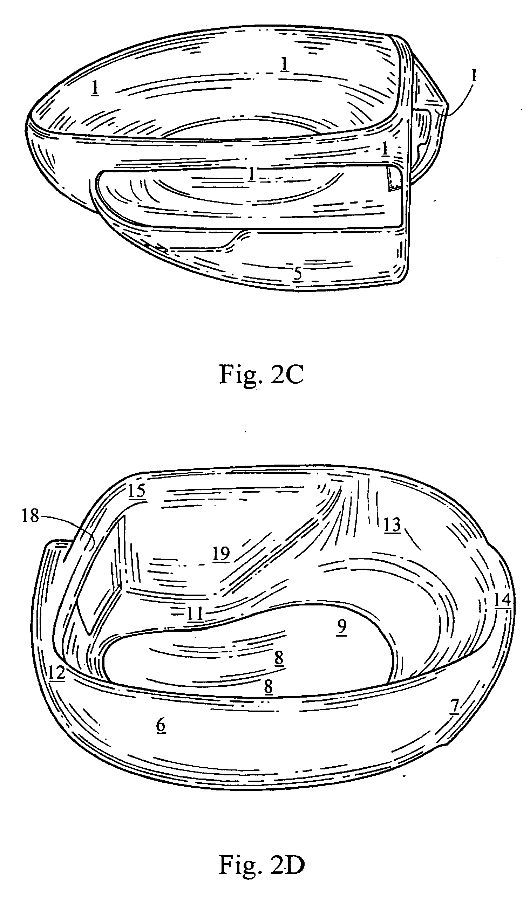

After thermoforming, the appliqués were fitted onto a laser trimming fixture and trimmed resulting in the part 22 generally seen in Figure 1. The trim buck was designed to keep the second surface from contacting the tool. This allows the dust formed from the trimming process to settle inside the part and not on the show surface. Back molding of the appliqués was carried out on a TOYO TM200G injection molder equipped with the 3" x 6" multi-gating IMD plaque tool. Films were placed into the B-side of the mold, and subsequently injection molded. Similarly, the formed mirror housings were also back molded. However, this time a KM550 injection molder in conjunction with a Britax mirror housing tool was utilized. Films were registered in the cavity side of the mold, and then injection molded with LS2-111 polycarbonate resin (General Electric). The parts were then coated with a weathering layer and an abrasion resistant layer as shown in Figures 2A-2D, the thickness of each coating at the numerical designations is in Figures 2A-2D listed in Table 4.

**Table 4**

| WEATHERING LAYER THICKNESS (µm) | | | |
|---|---|---|---|
| | Primer | | Silicone Hardcoat |
| 1 | 0.3287 | | 5.914 |
| 4 | 0.3557 | | 4.468 |
| 6 | 0.4392 | | 4.625 |

| ABRASION RESISTANT LAYER THICKNESS (µm) | | | |
|---|---|---|---|
| Outside/Convex | | | |
| 1 | 2.07 | 5 | 2.28 |
| 2 | 1.93 | 6 | 1.50 |
| 3 | 2.25 | 7 | 1.94* |
| 4 | 2.41 | 16 | 0.55* |
| * Artifacts of mounting | | | |

| Inside/Concave | | | |
|---|---|---|---|
| 8 | 1.27 | 9 | 1.60 |
| 10 | 1.21 | 11 | 0.45* |
| 12 | 0.98* | 13 | 0.98 |
| 14 | 2.24 | 15 | 2.58 |
| 17 | 1.61 | 18 | 1.61 |
| 19 | 0.52* | | |
| *Affected by pocket configuration | | | |

### EXAMPLE 4 - Test for Thermoforming Ability

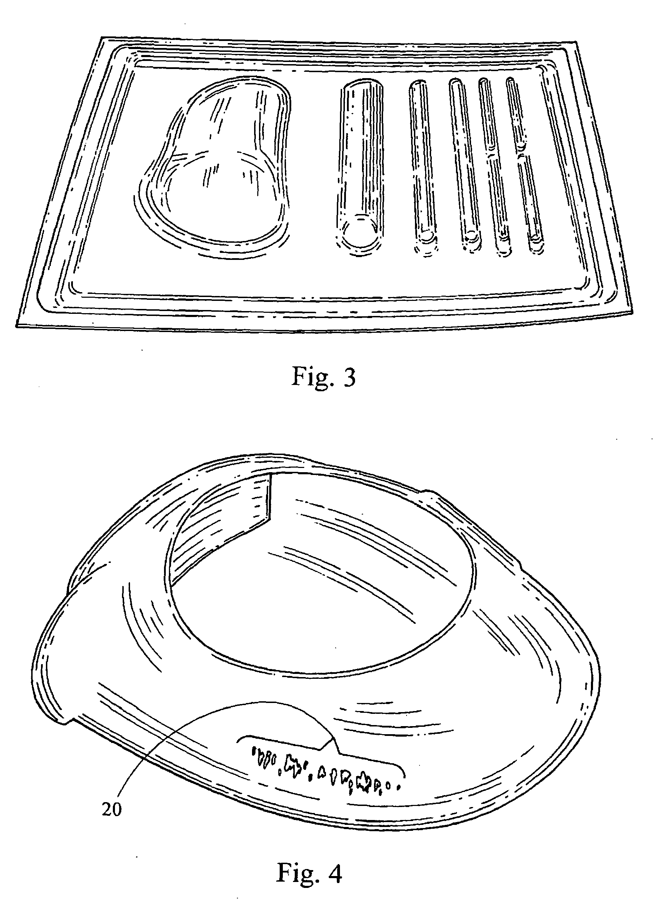

The thermoforming ability of the ink printed and cured onto the films was tested by use of a draw down tool. The draw down tool is set at its maximum height of 4.5" which delivers a 200% thinning characteristic, also stated as a 2.6:1 area ratio. This tool evaluates the performance of structural integrity, material-thinning, and ink abrasion resistance characteristics. The inks and films are thermoformed well over the entire spectrum of various geometrical features as shown in Figure 3. Good definition was observed and the inks were free from film tears, crazing, and severe discoloration in the formed geometric features.

As shown in Table 5, the blend of a polyester (PE) ink to a polycarbonate (PC) ink in a ratio of 80:20 showed no sign of ink abrasion or microcracking, where as ink abrasion/microcracking 20 did occur during the thermoforming of the ink with a PE:PC ratio of 20 : 80 as shown in formed film of Figure 4. This was particularly observed in areas comprising a 90° curve and areas where the film rubs excessively over the surface of the tool during ejection from the tool.

**Table 5**

| # | PE:PC ratio | Ink Abrasion | Opacity | Pin holing |
|---|---|---|---|---|
| A | 80:20 | No | Uniform | None |
| C | 20:80 | Yes | Insufficient | Moderate |

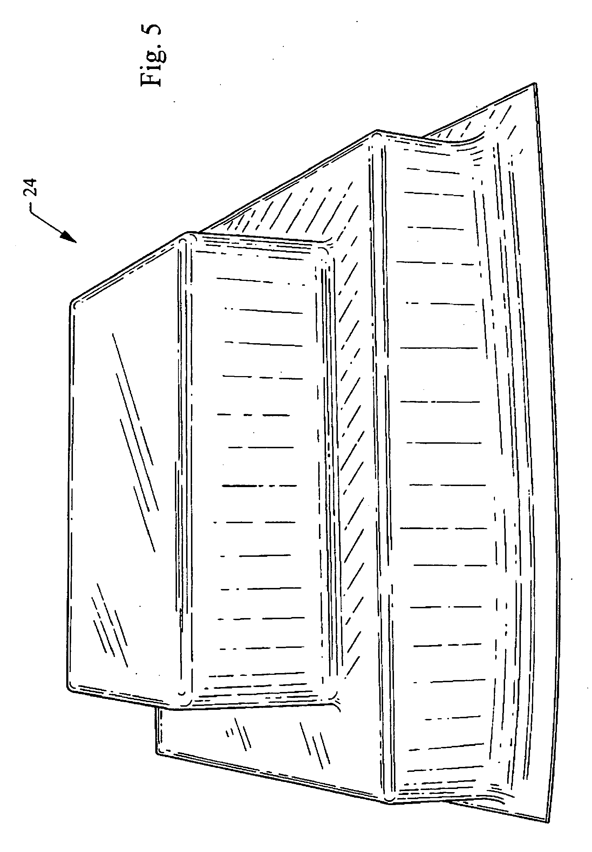

This experiment demonstrates that the ink formulation #A yields positive results, delivering relatively uniform opacity throughout the 200% film thickness gradient of a film subjected to draw testing 24, as seen in Figure 5. On the other hand, formulation #C failed to retain opacity at the bottom of all of the formed features. The typical part draw by the geometry represented in the multi-feature tool via Figure 5 was 50-100%. Part draw represents a means to state the degree of curvature associated with a multi-dimensional window. The results listed in Table 5 also suggest that the higher polyester containing ink formulation #A exhibits no pinholing on the printed and cured films, whereas ink formulation #C (containing a higher amount of the polycarbonate ink) shows a higher tendency towards pinholing with the concentration of "pinholes" 26 increasing with increasing draw as shown in FIG. 6.

### Ink Wash-Out

In this experiment, a study was carried out using the #A and #C printed films of the Test Substrate Preparation example prior to thermoforming, as described in the Forming a 3-D Decorative Glazing example, with three different gating styles: film fan gate, rib gate and tab gate. Under each gating scenario, the injection speed was varied with fill times varying between 0.45 seconds and 3.7 seconds as shown in Table 6.

**Table 6**

| CONDITIONS | |
|---|---|
| Mold Temperature (A)/(B) = 60°C/60°C | |
| Cooling Time = 15 seconds | |
| INJECTION SPEED (in/sec) | FILL TIME (s) |
| 0.30 | 3.70 |
| 1.50 | 0.90 |
| 3.70 | 0.45 |

The wash-out stability of an ink, which is very important to the success of film insert molding, is influenced by the gating characteristics resulting from the part design and the construction of the tooling. Both ink formulations performed similarly under all gating and injection molding scenarios. In all cases, a slower injection speed yielded the most ink wash-out. A slow injection speed is representative of the longer ink/resin contact time allowing the ink to heat up and then flow with the resin. A visual inspection of the injection molded parts 22 (mirror housings) as shown in Figure 7, revealed the presence of ink washout 28 for both the ink formulations near the gate. However, the ink washout was found to be minimal in films printed with ink formulation #A and was severe with ink formulation #C (the latter being shown in Figure 7).

A person skilled in the art will recognize from the previous description, modifications and changes can be made to the preferred embodiment of the invention without departing from the scope of the invention as defined in the following claims.

## Claims

1. A glazing assembly comprising:
a transparent plastic base layer having a first and a second surface;
a transparent plastic top layer having a first and a second surface;
a printed and cured ink on the first surface of the top layer, the ink having a synthetic resin, the synthetic resin being one of a polycarbonate resin, a polyester resin, and combinations thereof;
the first surface of the base layer and the first surface of the top layer being integrally melt bonded together forming a plastic panel; and
a weathering layer and an abrasion resistant layer deposited on the second surface of the top layer.

2. The glazing assembly of claim 1, wherein said transparent plastic base layer and said transparent plastic top layer are of a material selected from the group of polycarbonate resin, acrylic resin, polyacrylate resin, polyester resin, polysulfone resin, or mixtures thereof.

3. The glazing assembly of claim 1, wherein the transparent plastic top layer is a plastic film having a thickness of 0.05 to 2 mm.

4. The glazing assembly of claim 1, wherein the ink is a blended ink comprising a mixture of a polyester ink and a polycarbonate ink, wherein the blended ink comprises a polyester (PE) to polycarbonate (PC) ink weight ratio of 80:20.

5. The glazing assembly of claim 1, wherein said ink further comprises:
3 to 38 weight percent of a colorant pigment;
up to 45 weight percent of an opacity enhancing filler being an inorganic oxide with a mean particle size less than or equal to 1.0 micrometers;
up to 1 weight percent of a dispersant being an organomodified polysiloxane; and
0.1 to 5 weight percent isocyanate selected as one from the group consisting of aromatic polyisocyanates and aliphatic diisocyanates.

6. The glazing assembly of claim 1, wherein the printed and cured ink comprises 49 to 72 wt.% of a polyester resin, 12 to 18 wt.% of a polycarbonate resin, 6 to 10 wt.% of an isocyanate additive, 1.5 wt.% of a surfactant and up to 30 wt.% of additional fillers or pigments.

7. The glazing assembly of claim 1, wherein said abrasion resistant layer is deposited by one method selected from the group of plasma enhanced chemical vapor deposition (PECVD), arc-PECVD, ion assisted plasma deposition, magnetron sputtering, electron beam evaporation, and ion beam sputtering.

8. The glazing assembly of claim 1, wherein the abrasion-resistant layer is further deposited over the second surface of the base layer.

9. A method of making a glazing assembly, the method comprising:
providing a transparent plastic top layer having a first and second surface; printing and curing an ink on the first surface of the top layer, the ink having a synthetic resin being a polycarbonate resin, a polyester resin, or mixtures thereof;
forming the decorated top layer into the shape of one surface of a mold;
trimming the top layer to fit into the mold;
placing the decorated, formed, and trimmed top layer into the mold so that the second surface of the top layer resides against one surface of the mold;
back molding a transparent base layer by injecting a molten plastic resin into the mold cavity so that it makes contact with the first surface of the top layer;
cooling the molten plastic resin so that it forms the transparent base layer upon solidification having a first and second surface, the first surface of the base layer and the first surface of the top layer being melt bonded together;
removing the formed plastic panel from the mold;
applying a weathering layer to the second surface of the top layer; and
applying an abrasion resistant layer onto the surface of the weathering layer.

10. The method of claim 9, wherein said printing comprises one method selected from the group of screen-printing, pad or tampon printing, ink-jet printing, and membrane image transfer printing.

11. The method of claim 9, wherein said forming comprises one method selected from the group of vacuum thermoforming, pressure forming, cold forming, and drape forming.

12. The method of claim 9, wherein said back molding comprises one method selected from the group of injection molding, blow molding and injection compression molding.

13. The method of claim 9, wherein said transparent plastic base layer and said transparent top layer are of a material selected from the group of a polycarbonate resin, acrylic resin, polyacrylate resin, polyester resin, polysulfone resin, or mixtures thereof.

14. The method of claim 9, wherein the printed and cured ink comprises 49 to 72 wt.% of a polyester resin and 12 to 18 wt.% of a polycarbonate resin.

15. The method of claim 9, wherein the weathering layer is applied by one method selected from the group of curtain coating, spray coating, spin coating, dip coating, and flow coating.

16. The method of claim 9, wherein said abrasion resistant layer is deposited by one method selected from the group of plasma enhanced chemical vapor deposition (PECVD), arc-PECVD, ion assisted plasma deposition, magnetron sputtering, electron beam evaporation, and ion beam sputtering.

17. The method of claim 9, wherein the abrasion-resistant layer is further deposited over the second surface of the base layer.

## Patentansprüche

1. Ein Glasuraufbau umfassend:
eine transparente Kunststoff-Grundschicht mit einer ersten und einer zweiten Oberfläche;
eine transparente Kunststoff-Deckschicht mit einer ersten und einer zweiten Oberfläche;
eine gedruckte und gehärtete Druckfarbe auf der ersten Oberfläche der Deckschicht, wobei die Druckfarbe ein synthetisches Harz aufweist, wobei das synthetische Harz eines von einem Polycarbonatharz, einem Polyesterharz und von Kombinationen davon ist;
wobei die erste Oberfläche der Grundschicht und die erste Oberfläche der Deckschicht integral miteinander schmelzgebondet sind und eine Kunststofftafel bilden; und
eine Bewitterungsschicht und eine abriebfeste Schicht, die auf der zweiten Oberfläche der Deckschicht abgeschieden sind.

2. Der Glasuraufbau nach Anspruch 1, wobei die transparente Kunststoff-Grundschicht und die transparente Kunststoff-Deckschicht aus einem Material bestehen, das aus der Gruppe von Polycarbonatharz, Acrylharz, Polyacrylatharz, Polyesterharz, Polysulfonharz oder Gemischen davon ausgewählt ist.

3. Der Glasuraufbau nach Anspruch 1, wobei die transparente Kunststoff-Deckschicht eine Kunststofffolie mit einer Dicke von 0,05 bis 2 mm ist.

4. Der Glasuraufbau nach Anspruch 1, wobei die Druckfarbe eine Druckfarbenmischung ist, umfassend ein Gemisch von einer Polyester-Druckfarbe und einer Polycarbonat-Druckfarbe, wobei die Druckfarbenmischung ein Polyester (PE) zu Polycarbonat (PC)-Druckfarben-Gewichtsverhältnis von 80:20 umfasst.

5. Der Glasuraufbau nach Anspruch 1, wobei die Druckfarbe weiterhin umfasst:
3 bis 38 Gew.-% eines Farbpigments;
bis zu 45 Gew.-% eines die Opazität verstärkenden Füllstoffs, der ein anorganisches Oxid ist, mit einer mittleren Teilchengröße von kleiner oder gleich 1,0 µm;
bis zu 1 Gew.-% eines Dispergiermittels, das ein organomodifiziertes Polysiloxan ist; und
0,1 bis 5 Gew.-% Isocyanat, ausgewählt als eines aus der Gruppe bestehend aus aromatischen Polyisocyanaten und aliphatischen Diisocyanaten.

6. Der Glasuraufbau nach Anspruch 1, wobei die gedruckte und gehärtete Druckfarbe 49 bis 72 Gew.-% eines Polyesterharzes, 12 bis 18 Gew.-% eines Polycarbonatharzes, 6 bis 10 Gew.-% eines Isocyanat-Additivs, 1,5 Gew.-% eines grenzflächenaktiven Mittels und bis zu 30 Gew.-% von zusätzlichen Füllstoffen oder Pigmenten umfasst.

7. Der Glasuraufbau nach Anspruch 1, wobei die abriebfeste Schicht durch ein Verfahren abgeschieden ist, das aus der Gruppe von plasmaverstärkter chemischer Dampfabscheidung (PECVD), arc-PECVD, ionenunterstützter Plasmaabscheidung, Magnetron-Sputtern, Elektronenstrahlverdampfung und Ionenstrahlsputtern ausgewählt ist.

8. Der Glasuraufbau nach Anspruch1, wobei die abriebfeste Schicht weiterhin über der zweiten Oberfläche der Grundschicht abgeschieden ist.

9. Ein Verfahren zur Herstellung eines Glasuraufbaus, wobei das Verfahren umfasst:
Bereitstellen einer transparenten Kunststoff-Deckschicht mit einer ersten und einer zweiten Oberfläche;
Drucken und Härten einer Druckfarbe auf der ersten Oberfläche der Deckschicht, wobei die Druckfarbe ein synthetisches Harz aufweist, das ein Polycarbonatharz, ein Polyesterharz oder Gemische davon ist;
Formen der dekorierten Deckschicht zu der Form von einer Oberfläche einer Pressform;
Zuschneiden der Deckschicht, so dass sie in die Form passt;
Anordnen der dekorierten, geformten und zugeschnittenen Deckschicht in der Form, so dass die zweite Oberfläche der Deckschicht an einer Oberfläche der Pressform anliegt;
Gegenformen einer transparenten Grundschicht durch Spritzguss eines geschmolzenen Kunststoffharzes gegen das Formnest, so dass sie mit der ersten Oberfläche der Deckschicht Kontakt bekommt;
Abkühlen des geschmolzenen Kunststoffharzes, so dass es beim Verfestigen die transparente Grundschicht mit einer ersten und einer zweiten Oberfläche bildet, wobei die erste Oberfläche der Grundschicht und die erste Oberfläche der Deckschicht miteinander schmelzgebondet sind;
Entfernen der geformten Kunststofftafel aus der Pressform;
Aufbringen einer Bewitterungsschicht auf die zweite Oberfläche der Deckschicht; und
Aufbringen einer abriebfesten Schicht auf die Oberfläche der Bewitterungsschicht.

10. Das Verfahren nach Anspruch 9, wobei das Drucken ein Verfahren umfasst, das aus der Gruppe von Siebdruck, Kissen- oder Tampondruck, Tintenstrahldruck und Membran-Bildübertragungsdruck ausgewählt wird.

11. Das Verfahren nach Anspruch 9, wobei das Formen ein Verfahren umfasst, das aus der Gruppe von Vakuum-Thermoformen, Druckformen, Kaltformen und Streckformen ausgewählt wird.

12. Das Verfahren nach Anspruch 9, wobei das Gegenformen ein Verfahren umfasst, das aus der Gruppe von Spritzguss, Blasformen und Injektions-/Kompressionsformen ausgewählt wird.

13. Das Verfahren nach Anspruch 9, wobei die transparente Kunststoff-Grundschicht und die transparente Deckschicht aus einem Material sind, das aus der Gruppe von einem Polycarbonatharz, Acrylharz, Polyacrylatharz, Polyesterharz, Polysulfonharz, oder Gemischen davon ausgewählt wird.

14. Das Verfahren nach Anspruch 9, wobei die gedruckte und gehärtete Druckfarbe 49 bis 72 Gew.-% eines Polyesterharzes und 12 bis 18 Gew.-% eines Polycarbonatharzes umfasst.

15. Das Verfahren nach Anspruch 9, wobei die Bewitterungsschicht durch ein Verfahren aufgebracht wird, das aus der Gruppe von Vorhang-Beschichten, Sprühbeschichten, Drehbeschichten, Tauchbeschichten und Fließbeschichten ausgewählt wird.

16. Das Verfahren nach Anspruch 9, wobei die abriebfeste Schicht durch ein Verfahren abgeschieden wird, das aus der Gruppe von plasmaverstärkter chemischer Dampfabscheidung (PECVD), arc-PECVD, ionenunterstützter Plasmaabscheidung, Magnetron-Sputtern, Eleketronenstrahlverdampfung und Ionenstrahlsputtern ausgewählt wird.

17. Das Verfahren nach Anspruch 9, wobei die abriebfeste Schicht weiterhin über der zweiten Oberfläche der Grundschicht abgeschieden wird.

## Revendications

1. Ensemble de vitrage comprenant :
une couche de base en plastique transparent ayant une première et une deuxième surface ;
une couche supérieure en plastique transparent ayant une première et une deuxième surface ;
une encre imprimée et durcie sur la première surface de la couche supérieure, l'encre comportant une résine synthétique, la résine synthétique étant une résine choisie parmi une résine polycarbonate, une résine polyester et leurs combinaisons ;
la première surface de la couche de base et la première surface de la couche supérieure étant intégralement liées conjointement par fusion, formant un panneau de plastique ; et
une couche d'exposition aux intempéries et une couche résistante à l'abrasion déposées sur la deuxième surface de la couche supérieure.

2. Ensemble de vitrage selon la revendication 1, dans lequel ladite couche de base de plastique transparent et ladite couche supérieure de plastique transparent sont d'un matériau choisi dans le groupe comprenant une résine polycarbonate, une résine acrylique, une résine polyacrylate, une résine polyester, une résine polysulfone et leurs mélanges.

3. Ensemble de vitrage selon la revendication 1, dans lequel la couche supérieure de plastique transparent est un film de plastique ayant une épaisseur de 0,05 à 2 mm.

4. Ensemble de vitrage selon la revendication 1, dans lequel l'encre est une encre mixte comprenant un mélange d'une encre polyester et d'une encre polycarbonate, l'encre mixte comprenant un rapport en poids d'une encre polyester (PE) à une encre polycarbonate (PC) de 80:20.

5. Ensemble de vitrage selon la revendication 1, dans lequel ladite encre comprend en outre :
3 à 38 % en poids d'un pigment colorant ;
jusqu'à 45 % en poids d'un agent de charge renforçant l'opacité, qui est un oxyde inorganique présentant une taille de particules moyenne inférieure ou égale à 1,0 µm ;
jusqu'à 1 % en poids d'un dispersant qui est un polysiloxane organo-modifié ; et
0,1 à 5 % en poids d'isocyanate choisi dans le groupe comprenant les poli-isocyanates aromatiques et les diisocyanate aliphatiques.

6. Ensemble de vitrage selon la revendication 1, dans lequel l'encre imprimée et durcie comprend 49 à 72 % en poids d'une résine polyester, 12 à 18 % en poids d'une résine polycarbonate, 6 à 10 % en poids d'un additif isocyanate, 1,5 % en poids d'un tensioactif et jusqu'à 30 % en poids d'agents de charge supplémentaires ou de pigments.

7. Ensemble de vitrage selon la revendication 1, dans lequel la couche résistante à l'abrasion est déposée par un procédé choisi dans le groupe comprenant le dépôt chimique en phase vapeur assisté par plasma (PECVD), le PECVD par arc, le dépôt plasma assisté par canon à ions, la pulvérisation par magnétron, l'évaporation par faisceau d'électrons et la pulvérisation par faisceau d'ions.

8. Ensemble de vitrage selon la revendication 1, dans lequel la couche résistante à l'abrasion est déposée en outre sur la deuxième surface de la couche de base.

9. Procédé de production d'un ensemble de vitrage, le procédé comprenant :
la mise à disposition d'une couche supérieure de plastique transparent ayant une première et une deuxième surface ; l'impression et le durcissement d'une encre sur la première surface de la couche supérieure, l'encre comportant une résine synthétique qui est une résine polycarbonate, une résine polyester ou leurs mélanges ;
la mise en forme de la couche de base décorée à la forme d'une surface d'un moule ;
la découpe de la couche supérieure pour s'ajuster dans le moule ;
l'application dans le moule de la couche supérieure décorée, mise en forme et découpée, de sorte que la deuxième surface de la couche supérieure soit placée contre une surface du moule ;
le remoulage d'une couche de base transparente en injectant une résine plastique fondue dans la cavité du moule de sorte qu'elle soit en contact avec la première surface de la couche supérieure ;
le refroidissement de la résine plastique fondue de sorte qu'elle forme la couche de base transparente après solidification, ayant une première et une deuxième surface, la première surface de la couche de base et la première surface de la couche supérieure étant liées conjointement par fusion ;
le retrait du panneau de plastique formé du moule ;
l'application d'une couche d'exposition aux intempéries sur la deuxième surface de la couche supérieure ; et
l'application d'une couche résistante à l'abrasion sur la surface de la couche d'exposition aux intempéries.

10. Procédé selon la revendication 9, dans lequel ladite impression comprend un procédé choisi dans le groupe comprenant la sérigraphie, l'impression au tampon, l'impression à jet d'encre et l'impression par transfert d'image sur membrane.

11. Procédé selon la revendication 9, dans lequel ladite mise en forme comprend un procédé choisi dans le groupe comprenant le thermoformage sous vide, le formage par pression, le formage à froid et le drapage.

12. Procédé selon la revendication 9, dans lequel ledit remoulage comprend un procédé choisi dans le groupe comprenant le moulage par injection, le moulage par soufflage et le moulage par injection - compression.

13. Procédé selon la revendication 9, dans lequel ladite couche de base de plastique transparent et ladite couche supérieure transparente sont en un matériau choisi dans le groupe comprenant la résine polycarbonate, la résine acrylique, la résine polyacrylate, la résine polyester, la résine polysulfone ou leurs mélanges.

14. Procédé selon la revendication 9, dans lequel l'encre imprimée et durcie comprend 49 à 72 % en poids d'une résine polyester et 12 à 18 % en poids d'une résine polycarbonate.

15. Procédé selon la revendication 9, dans lequel la couche d'exposition aux intempéries est appliquée par un procédé choisi dans le groupe comprenant le revêtement au rideau, le revêtement par pulvérisation, le revêtement par centrifugation, le revêtement par trempage et le revêtement par aspersion.

16. Procédé selon la revendication 9, dans lequel ladite couche résistante à l'abrasion est déposée par un procédé choisi dans le groupe comprenant le dépôt chimique en phase vapeur assisté par plasma (PECVD), le PECVD par arc, le dépôt plasma assisté par canon à ions, la pulvérisation par magnétron, l'évaporation par faisceau d'électrons et la pulvérisation par faisceau d'ions.

17. Procédé selon la revendication 9, dans lequel la couche résistante à l'abrasion est déposée en outre sur la deuxième surface de la couche de base.
